# EUROPÄISCHE PATENTSCHRIFT

(11) **EP 3 625 965 B1**
(45) Veröffentlichungstag und Bekanntmachung des Hinweises auf die Patenterteilung: **26.07.2023**
(21) Anmeldenummer: 18718120.1
(22) Anmeldetag: 06.04.2018
(51) Int. Cl.: H04N 21/2343, G06T 19/00

(54) **VERARBEITUNGSVERFAHREN UND VERARBEITUNGSSYSTEM FÜR VIDEODATEN**
PROCESSING METHOD AND PROCESSING SYSTEM FOR VIDEO DATA
PROCÉDÉ DE TRAITEMENT ET SYSTÈME DE TRAITEMENT DE DONNÉES VIDÉO

(30) Priorität: 15.05.2017 DE 102017110506; 01.11.2017 DE 102017125544
(43) Veröffentlichungstag der Anmeldung: 25.03.2020
(73) Patentinhaber: Fraunhofer-Gesellschaft zur Förderung der angewandten Forschung e.V., 80686 München (DE)
(72) Erfinder: LASAK, Martin, 14129 Berlin (DE); BASSBOUSS, Louay, 10557 Berlin (DE); STEGLICH, Stephan, 13587 Berlin (DE)
(74) Vertreter: Maikowski & Ninnemann Patentanwälte Partnerschaft mbB
(86) Internationale Anmeldenummer: PCT/EP2018/058926
(87) Internationale Veröffentlichungsnummer: WO 2018/210485

(56) Entgegenhaltungen:
- LOUAY BASSBOUSS ET AL: "High Quality 360° Video Rendering and Streaming", 2014 2ND INTERNATIONAL CONFERENCE ON 3D VISION, Bd. 1, 25. November 2016 (2016-11-25), Seiten 1-4, XP055486108, ISSN: 1550-6185, DOI: 10.1109/3DV.2014.28
- MILLER G ET AL: "THE VIRTUAL MUSEUM: INTERACTIVE 3D NAVIGATION OF A MULTIMEDIA DATABASE", JOURNAL OF VISUALIZATION AND COMPUTER ANIMATION, XX, XX, Bd. 3, Nr. 3, 1. Januar 1992 (1992-01-01), Seiten 183-197, XP000925118,
- SHENCHANG ERIC CHEN: "QUICKTIME VR - AN IMAGE-BASED APPROACH TO VIRTUAL ENVIRONMENT NAVIGATION", SIGGRAPH 95 CONFERENCE PROCEEDINGS : AUGUST 6 - 11, 1995, [LOS ANGELES, CALIFORNIA]; [COMPUTER GRAPHICS PROCEEDINGS (SIGGRAPH)], ACM, NEW YORK, NY, USA, 6. August 1995 (1995-08-06), Seiten 29-38, XP000546213, ISBN: 978-0-89791-701-8

## Beschreibung

Für nahtlose Übergange zwischen Perspektiven (Sichtfeldern, engl. Field-of-View (FOV)) in Videos existieren grundsätzlich zwei Ansätze, die eine repetitive Neuberechnung (d. h. eine Berechnung in Realzeit) erforderlich machen.

Die hier vorgeschlagenen Ausführungsformen schlagen einen weiteren Ansatz vor, in dem die Berechnung in Realzeit entfällt, indem die entsprechenden Videodaten vorberechnet und wiederverwendet werden.

Ein Perspektivenwechsel ist die Änderung des Sichtfeldes, insbesondere in 360° / Panorama Videos oder zwischen Teilbereichen in einem insgesamt größeren Bildbereich eines ebenflächigen Videos oder eine alternative Abfolge aus mehreren Videos bei gleichem Startpunkt.

### Stand der Technik

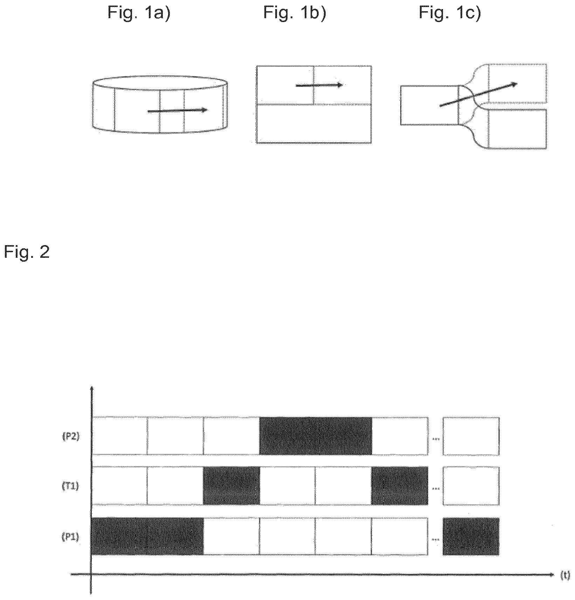

Ein Ansatz geht von der Aufbereitung eines (Quell-)Videos oder eines Satzes logisch zusammenhängender Quellvideos (z. B. von einem Rundumsicht-Multi-Kamerasystem) mittels Berechnung/Bestimmung der Videodaten des Perspektivenwechsels (Übergang von einer Ausgangsperspektive (Ausgangs-FOV) zu einer Zielperspektive (Ziel-FOV)) aus dem Quellmaterial (vollständigen Videomaterial) im Backend (Server) aus und der Übertragung der gerenderten Videodaten zu den Videoklienten (Clients). Die Aufbereitung kann dabei aus einem Schwenken des Blickwinkels im sphärischen oder zylindrischen Quellvideo (Fig. 1a) oder einer Positionsänderung des Bildausschnitts im ebenflächigen Quellvideo (Fig. 1b) oder aber der Auswahl eines Alternativpfades aus mehreren Quellvideos bestehen (Fig. 1c).

Nach der Berechnung/Bestimmung werden die dem Perspektivenwechsel und die dem Ziel-FOV entsprechenden Videodaten in einem entsprechenden Format an den Client übertragen. Durch die dynamische Aufbereitung (Berechnung/Bestimmung und Encodierung) werden bei diesem Ansatz für jeden Client jeweils eine Sitzung (Session) und entsprechende Ressourcen benötigt, die vorgehalten werden müssen. Das hat zur Folge, dass dieser Ansatz mit einer wachsenden Anzahl von Clients schlecht skaliert (Skalierbarkeitsproblem).

In einem anderen Ansatz, der heute häufiger verwendet wird, wird das vollständige Videomaterial an den Client übermittelt, der daraus die Videodaten für das jeweilige FOV und die Perspektivenübergänge berechnet/bestimmt. Weil bei diesem Ansatz sowohl sichtbare als auch final nichtsichtbare Bildbereiche des Videos an den Client übertragen werden, wird Bandbreite unnötig verbraucht bzw. ist für eine gleiche Bildqualität (Auflösung) des FOVs eine höhere Bandbreite für die Datenübertragung notwendig. Zusätzlich muss/müssen das Quellvideo bzw. die Quellvideos (das jeweilige komplette Quellmaterial) vom Client aufbereitet/gerendert werden, so dass neben der höheren Datenübertragung auch eine gesteigerte Ressourcenanforderung (Speicher, CPU/GPU, Energie) an den Client gestellt ist. Mitunter sind nicht alle Endgeräte mit der nötigen Grafikprozessor- und Rechenleistung ausgestattet, um die Aufbereitung des z.B. sphärischen Videos für einen nahtlosen Übergang beim Perspektivenwechsel überhaupt zu bewerkstelligen, wie z.B. auf Fernsehern, Smartphones (Problem der hohen Ressourcenanforderung).

Aktuell werden sphärische 360° Videos mit den gleichen Verfahren übertragen, die auch beim Streaming herkömmlicher Videos zum Einsatz kommen. Obwohl circa 90% des 360° Videobilds außerhalb des Sichtfensters des individuellen Nutzers liegen, werden diese trotzdem zum Client übertragen. Das bedeutet, dass der Großteil der über das Internet zum Nutzer gestreamten Videoinhalte ungesehen verfällt und damit Bandbreite und Ressourcen unnötig verbraucht werden.

Die Berechnung des Sichtfeldes (FOVs) auf dem Client braucht auch mehr Ressourcen (CPU und GPU) im Vergleich zum Abspielen von klassischen Videos. Wie weiter unten aufgeführt, gibt es verschiedene Versuche aus der Forschung und Standardisierung, um die Verwendung von unnötiger Bandbreite und Prozessorleistung zu reduzieren.

### Anforderungen

Um die einzelnen Lösungsansätze miteinander vergleichen zu können, werden die folgenden sieben Anforderungen berücksichtigt.

A1: Nur das angeforderte Sichtfeld (FOV) zum Client streamen: Der Client erhält nur die Videoinhalte, die dem Nutzer angezeigt werden und somit wird keine Bandbreite und Ressourcen unnötig verbraucht.

A2: Anwendbares adaptives Bitraten Streaming: Ähnlich wie beim herkömmlichen Video Streaming ist es wichtig, dass es möglich ist, ein einzelnes FOV in verschiedenen Bitraten (Qualitätsprofile) zu übermitteln und dass der Client das passendste Anpassungsset wählen kann. Dieses ist von verschiedenen Faktoren wie der verfügbaren Bandbreite und den verfügbaren Ressourcen auf dem Abspielgerät abhängig. Viele der existierenden 360°-Video-Ansätze unterstützen das adaptive Streamen, indem sie DASH oder HLS verwenden. Jedoch wird dieser Ansatz aktuell auf das gesamte 360°-Video (komplettes Quellmaterial), statt lediglich das angeforderte FOV angewandt.

A3: Wiedergabe ohne zusätzliche Verarbeitung beim Client: Für die Wiedergabe von 360° Videos müssen die jeweiligen Sichtfelder aus der Videoquelle berechnet werden, bevor die Daten zum Wiedergabegerät gesendet werden. Die Verarbeitungslast hängt von verschiedenen Faktoren wie der verwendeten Projektionsmethode (equirectangular, kubisch, zylindrisch), der Videoauflösung und der Bildrate ab. Eine Wiedergabe ohne zusätzliche Verarbeitung beim Client ermöglicht es auch eingeschränkten Geräten sowie Geräten mit limitierten Programmierfunktionen, 360°-Inhalte in ähnlicher Weise abzuspielen wie herkömmliche Videos.

A4: Streaming ohne zusätzliche Verarbeitung auf dem Server: Die Verarbeitung und die Kalkulation der nötigen FOV-Videodaten kann auch auf dem Server oder jedem anderen Netzwerkknoten in Echtzeit anstelle des Clients erfolgen. Dies hat jedoch, falls das System für eine hohe Nutzerzahl zur Verfügung steht, einen Einfluss auf die Skalierung. Ein hoch-skalierbares 360°-Streaming ist dann gegeben, wenn keine aufwändige Verarbeitung in Echtzeit pro Client notwendig ist.

A5: Verwendung von Content Delivery Networks: Content Delivery Networks (CDNs) übermitteln Inhalte mit hoher Verfügbarkeit und Hochleistung an Endverbraucher. Medienobjekte können im Netzwerk auf verteilten Knoten zwischengespeichert werden, um zu vermeiden, den Inhalt immer direkt vom originären Quellserver zu streamen. Inhaltsanfragen werden üblicherweise algorithmisch an die Knoten übermittelt, die am besten geeignet sind, um den Inhalt zu Verfügung zu stellen. Auch für die Ausspielung von 360°-Videos ist es wichtig, von CDNs zu profitieren. Das bedeutet, dass das 360°-Video so vorbereitet werden muss, dass es über CDNs übertragen werden kann. Eine direkte Verbindung zwischen Clients und dem originären Rendering Server (Quellserver), die für eine Client-spezifische Aufbereitung des Videos auf dem Server in Echtzeit notwendig ist, ist nicht möglich, wenn ein CDN verwendet wird.

A6: Weicher Übergang beim Perspektivenwechsel: Wenn ein Nutzer in einem 360°-Video navigiert, ist es von der Anwenderseite her sehr wichtig, dass der Sichtfeldwechsel weich erfolgt (Perspektivenübergang, der eine Drehung simuliert). Ein harter Wechsel (Schnitt ohne Übergang) zwischen den beiden Sichtfeldern hat einen negativen Effekt auf die qualitative Wahrnehmung.

A7: Keine Verzerrungen im sichtbaren FOV: In Abhängigkeit von den verwendeten Projektionstypen, der verwendeten Methode, um das Video aufzunehmen und zu schneiden, sowie der Dimension des sichtbaren FOV, werden unterschiedliche Qualitäten erreicht. Um eine bestmögliche Qualität zu erreichen, sollten möglichst wenige bis gar keine Verzerrungen in der Darstellung des Videobildes wahrgenommen werden können.

Alle aktuell bekannten Ansätze für die Übertragung eines Sichtfeldes verletzten entweder das Kriterium der effizienten Ressourcenverwendung auf der Clientseite oder das Kriterium der Skalierbarkeit auf der Serverseite. Im ersten Fall muss der Client den erhaltenen Inhalt vor dem Darstellen verarbeiten, um das gewünschte Sichtfeld zu berechnen. Das hat Auswirkungen auf die Batterielaufzeit, Performance und Usability und das fällt besonders auf Geräten mit limitierten Ressourcen ins Gewicht. Im zweiten Fall muss ein Video-Encoder pro Client auf Serverseite für die Berechnung des Sichtfeldes bereitgehalten werden. Das hat in der Regel hohe Kosten zur Folge und skaliert zumeist schlecht mit einer wachsenden Clientzahl.

Im Folgenden werden bereits existierende Ansätze (L1, L2, L3) und die hier vorgestellte Lösung (L4) klassifiziert und in Bezug auf die zuvor erläuterten Anforderungen A1 bis A7 bewertet.

L1: Quellmaterial wird vollständig zum Client übertragen und die Bearbeitung auf dem Client ausgeführt. Beispiele: YouTube und Facebook 360° Player.

L2: 360°-Video wird in Kacheln (engl. Tiles) zerlegt, die für verschiedene Bitraten erstellt werden. Abhängig vom aktuellen FOV werden die Kacheln, die für die Berechnung des aktuellen FOV gebraucht werden, mit höherer Bitrate und die restlichen mit niedriger Bitrate vom Server angefragt. Der Client muss die Kacheln zusammenfügen und das FOV berechnen. Beispiele: HEVC Tiles.

L3: Das Video individuell auf dem Server verarbeiten und nur das erforderliche Sichtfeld zum Client streamen. Dieser kann es ohne weitere Verarbeitung im selben Player abspielen wie herkömmliche Videos. Beispiele: Fraunhofer FOKUS Cloud 360° Video Playout.

L4: Ausreichend viele verschiedene statistische und dynamische FOV-Datensätze aus dem Quellmaterial vorberechnen und speichern. Während des Streamens werden die entsprechend dem zeitlichen Ablauf jeweils benötigten Ausschnitte der schon vorberechneten FOV-Datensätze, die auf dem Server gespeichert sind, zum Client übertragen. Deshalb ist weder auf dem Server noch auf dem Client zu diesem Zeitpunkt eine Berechnung nötig. Zudem gibt es keine unnötig verwendete Bandbreite, da lediglich die Daten für das angeforderte FOV zum Client übertragen werden.

Die Tabelle 1 wertet die existierenden Ansätze in Bezug auf die herausgestellten Anforderungen aus.

**Tabelle 1**

| | **L1** | **L2** | **L3** | **L4** |
|---|---|---|---|---|
| **A1** | **-**- | - | ++ | ++ |
| **A2** | - | ++ | ++ | ++ |
| **A3** | -- | -- | ++ | ++ |
| **A4** | ++ | -- | -- | ++ |
| **A5** | ++ | ++ | -- | ++ |
| **A6** | ++ | ++ | ++ | ++ |
| **A7** | ++ | ++ | ++ | ++ |

In dem Dokument LOUAY BASSBOUSS ET AL, "High Quality 360° Video Rendering and Streaming", 2014 2ND INTERNATIONAL CONFERENCE ON 3D VISION, Bd. 1, 25. November 2016 (20161125), Seiten 1 -4, XP055486108, ISSN: 1550-6185, DOI: 10.1109/3DV.2014.28 ist ein weiteres Verarbeitungsverfahren für Videodaten beschrieben.

Es werden Lösungen benötigt, bei denen insbesondere eine gute Skalierbarkeit für Server und Clientsysteme gewährleistet ist.

Das Verarbeitungsverfahren nach Anspruch 1 stellt eine solche Lösung bereit.

Dabei wird in einem ersten Schritt aus (umfassenderem) Video-Quellmaterial eine vorbestimmte Menge statischer FOV-Datensätze vorberechnet und gespeichert. Die statischen FOV-Datensätze zeigen Sichtfelder (FOVs) entsprechend einer festen Blickrichtung.

Des Weiteren werden aus dem Video-Quellmaterial zeitliche Übergänge zwischen den gespeicherten statischen FOV-Datensätzen berechnet und gespeichert, die als dynamische FOV-Datensätze Übergangsdaten bilden. Somit werden vorab Videodaten gespeichert, die Übergänge zwischen zwei FOVs bilden können.

Dabei werden sofort oder zu einem späteren Zeitpunkt ein statischer oder dynamischer Ausgangs-FOV-Datensatz und ein statischer oder dynamischer Ziel-FOV-Datensatz, insbesondere von einem Nutzer, mittelbar durch Wahl der entsprechenden FOVs gezielt angewählt. Das Ausgangs-FOV und das Ziel-FOV geben die Anfangs- und Endpunkte vor, zwischen den die dynamischen FOV-Datensätze eingefügt werden.

Die den angewählten FOV-Datensätzen im zeitlichen Verlauf entsprechenden Videodaten, einschließlich der dynamischen Übergangsdaten zwischen Ausgangs-FOV und Ziel-FOV, werden gestreamt oder sind streambar. Dies bedeutet, dass die Videodaten sofort oder nach einer Zwischenspeicherung der angewählten statischen und/oder dynamischen FOV-(Teil-)Datensätze und der entsprechenden dynamischen Übergangsdaten (ebenfalls als ein oder mehrere FOV-(Teil-)Datensätze) gestreamt werden können.

Dabei kann der Videostream insbesondere auf der Displayvorrichtung, insbesondere einem Client angezeigt werden.

Zur Reduktion der zu übertragenden Datenmenge werden in einer Ausführungsform ausschließlich die zeitlich jeweils benötigten Videodaten des Ausgangs-FOV-Datensatzes, des Ziel-FOV-Datensatzes und die dynamischen Übergangsdaten gestreamt oder sind streambar.

Damit die Daten auch für eine größere Anzahl von Nutzern mit Clients schnell zugreifbar sind, sind in einer Ausführungsform die vorberechneten statischen FOV-Datensätze und die vorberechneten dynamischen Übergangsdaten-Datensätze redundant auf einem Serversystem, insbesondere einem verteilten Serversystem gespeichert. Das Serversystem kann insbesondere geografisch verteilt aufgebaut sein, wobei die Datensätze mindestens teilweise redundant darauf gespeichert sind.

Die dynamischen Übergangsdaten sind aus einer Menge von dynamischen FOV-Datensätzen auswählbar, die jeweils einen vorbestimmten Bereich, insbesondere Winkelbereich oder Raumwinkelbereich, abdecken. Es ist auch die direkte und sprunghafte Ansteuerung eines (anderen) FOV durch den Benutzer möglich, ohne dass erst die Zwischenansichten abgespielt werden. Die Granularität der möglichen FOVs wird bestimmt durch die Anzahl der Haltepunkte, z.B. in einer sphärischen Projektion entspricht diese der Anzahl aller diskreten Winkelpositionen der (virtuellen) Kamera (was wiederum der Anzahl der statischen FOVs entspricht). Je höher die Anzahl, umso mehr dynamische FOV-Datensätze müssen vorgehalten werden.

Ferner kann die Position, insbesondere der Standpunkt und/oder die Blickrichtung, eines virtuellen Betrachters beim Ausgangs-FOV und dem Ziel-FOV unterschiedlich sein.

Die Displayvorrichtung kann in einer Ausführungsform mindestens einen Flatscreen, mindestens einen gekrümmten Panoramabildschirm, eine Halbkugelprojektionsfläche, ein Head-Mounted-Display und / oder eine Fulldomeprojektionsfläche aufweisen.

Die Aufgabe wird auch durch ein Verarbeitungssystem für Videodaten mit den Merkmalen des Anspruchs 9 gelöst.

Dabei dient ein Mittel zur Vorberechnung und Speicherung einer vorbestimmten Menge statischer FOV-Datensätze aus dem Video-Quellmaterial und ein Mittel zur Berechnung und Speicherung dynamischer FOV-Datensätze als Übergangsdaten für die zeitlichen Übergänge der gespeicherten statischen FOV-Datensätze. Mit diesem Pre-rendering werden aufwändige Neuberechnungen vermieden. Im Folgenden wird - wann immer notwendig - auf diese gespeicherten FOV-Datensätze zurückgegriffen.

Mit einem Mittel zur gezielten mittelbaren Anwahl eines statischen oder dynamischen Ausgangs-FOV-Datensatzes und eines statischen oder dynamischem Ziel-FOV-Datensatzes, insbesondere durch eine von einem Nutzer ausgelöste Interaktion wie z.B. ein Tastendruck, der beispielsweise einen Richtungswechsel oder das Ende eines Richtungswechsels signalisiert, oder eine Änderung der Position oder der Blickrichtung im realen Raum, werden diese Datensätze mittelbar gezielt angewählt. Der Nutzer kann auf unterschiedliche Art und Weise bestimmte Perspektiven (FOVs) aus der Gesamtheit der vorberechneten Videodaten (FOV-Datensätze) auswählen.

Dann dient ein Mittel dem Streamen der den angewählten FOV-Datensätzen im zeitlichen Ablauf entsprechenden Videodaten, einschließlich der dynamischen Übergangsdaten zwischen Ausgangs-FOV und Ziel-FOV.

Die Anzeige kann dann insbesondere auf einer Displayvorrichtung, insbesondere mit einem Client, erfolgen.

In einer Ausführungsform sind einige oder alle Mittel des Verarbeitungssystems auf unterschiedlichen Rechnern angeordnet.

Ausführungsformen werden anhand der Zeichnungen beschrieben, dabei zeigt
- Fig. 1a bis 1c:: Perspektivenwechsel im Quellvideo, wobei Fig. 1a einen sphärischen, zylindrischen, Fig. 1b einen ebenflächigen und Fig. 1c einen alternativen Pfad zeigt;
- Fig. 2:: ein beispielhaftes Ausspielen vorberechneter statischer FOV-(Teil- )Datensätze (P1, P2) und eines dynamischen FOV(Teil-)Datensatzes (T1) über der Zeit t;
- Fig. 3:: eine Darstellung einer vereinfachten Konfiguration mit zeitlichen Verläufen statischer FOVs (33 waagrechte Abschnitte) und dynamischen FOVs (34, 35 diagonale Abschnitte), der möglichen Übergangspunkte (36) und ein hervorgehobener Verlauf einer Nutzersitzung (37);
- Fig. 4:: eine schematische Darstellung eines Servers mit vorgespeicherten Datensätzen für statische und dynamische FOVs;
- Fig. 5:: eine schematische Darstellung einer Auswahl eines Ausgangs-FOV- Datensatzes, eines Ziel-FOV-Datensatzes und eines dynamischen Übergangsdatensatzes.

Die hier anhand von Ausführungsformen dargestellten Verfahren und Systeme erlauben u. a. die Freiheitsgrade der Perspektivenwechsel in Videos sinnvoll und effizient festzulegen, so dass eine einmalige Aufbereitung des Videomaterials im Backend ausreicht, um anschließend beliebig viele Videoklienten über ein Content-Delivery-Netzwerk (CDN) effizient zu bedienen.

Diese Effizienz kann aus einer Beschränkung resultieren, da in vielen Szenarien die unbeschränkte Anzahl an Freiheitsgraden für einen Wechsel des FOV (Perspektivenwechsel) nicht zwingend notwendig ist. Die Beschränkung kann mit drei Werten parametrisiert werden.
- P_{N}: Anzahl statischer FOVs
- T_{N}: Anzahl möglicher benachbarter FOVs für nahtlosen Übergang
- t_{G}: kleinste zeitliche Einheit eines für sich stehenden Videoteils, i. d. R. Segment- oder "group-of-pictures (GOP)"-Länge

In einem Vorverarbeitungsprozess werden somit maximal P_{N} * (T_{N} + 1) Videos berechnet, wobei zwischen diesen an den Zeitpunkten T₀ + n * t_{G} mit n >= 0 gewechselt werden kann (T₀ = Beginn des Videos). Auf Anfrage des Clients werden die vorberechneten Videos an bestimmten Stellen/Zeitpunkten miteinander zum fertigen Video / Videostream zusammengefügt und ausgespielt. Das Zusammenfügen kann sowohl im Backend passieren als auch vom Client erledigt werden, wobei das Zusammenfügen mittels Dateikopieroperationen und ohne Neukodierung des Videos erfolgt. Damit sind die Anforderungen an den Client die gleichen wie für das Abspielen klassischer Videos / Videostreams (z.B. auf einem Smartphone). Es werden ausschließlich nur Videodaten übertragen, die auch angezeigt werden. Zudem stehen die in der Vorverarbeitung einmalig erstellen Videos allen Clients zur Verfügung.

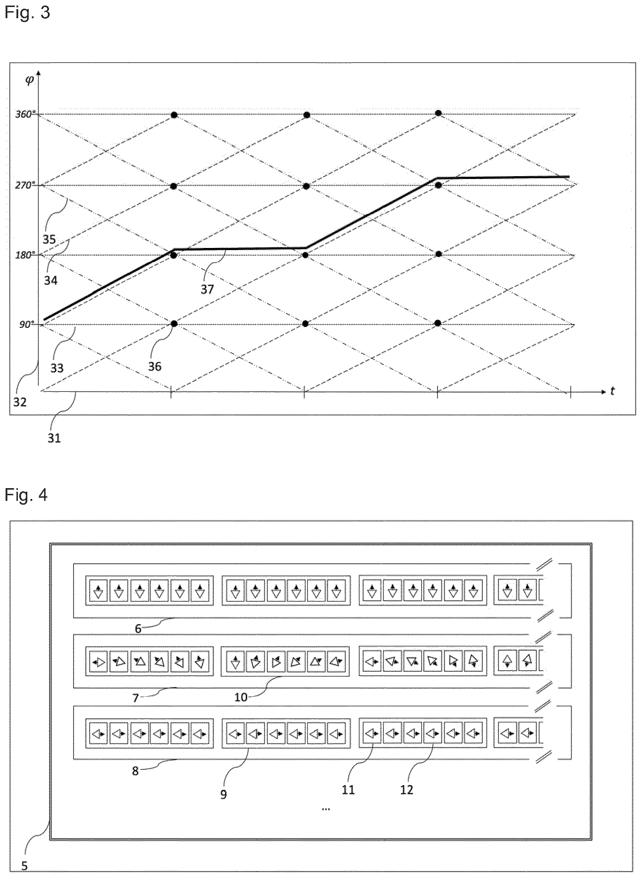

Der technische Mechanismus umfasst in einer Ausführungsform die folgenden Schritte, die im Zusammenhang mit den Fig. 3 bis 5 erläutert werden.
a) Vorverarbeitung und Berechnung der statischen FOV-Datensätze
Dazu erfolgt eine Aufarbeitung des Quellvideos (z. B. eines sphärischen Videos) und Erzeugung aller für die Übertragung und Darstellung notwendigen Videodaten im Backend (Lösung des Skalierbarkeitsproblems)

Es wird eine feste Anzahl statischer FOVs P_{N} festgelegt.

Ein statisches FOV zeichnet sich dadurch aus, dass die (virtuelle) Kamera im Vorverarbeitungsprozess (oder im Generierungsprozess bei computeranimiertem Material) einen festen Standort im Raum und eine feste Blickrichtung 33 über die gesamte Aufnahmezeit 31 (d.h. entlang der t-Achse) hinweg hat.

Für universelle FOV-Wechsel (Perspektivenwechsel) hat es sich als vorteilhaft erwiesen, die statischen FOVs - zumindest in jeder Richtung (z. B. horizontal, vertikal ...) separat betrachtet - in regelmäßigen Abständen voneinander anzuordnen. Andere Anordnungen sind jedoch möglich und können in Abhängigkeit vom Einsatzzweck und von den Videoinhalten sinnvoll sein.

### b) Berechnung der zeitlichen Übergänge (dynamischen FOV-Datensätzen) zwischen gespeicherten statischen FOV-Datensätzen

Es erfolgt eine Vorberechnung aller Videosequenzen mit dynamischen FOVs zwischen den statischen FOVs wiederholend mit dem Intervall tc. Die Vorberechnung erfolgt durch eine Transition, d.h. der Bewegung der Position und/oder Ausrichtung einer virtuellen oder realen Kamera über die Zeit.

Für universelle FOV-Wechsel in Videos sind in der Regel Kameraschwenks mit fester Geschwindigkeit und festem Winkel gut geeignet, können aber auch individuell für jedes Video und jede Videoszene festgelegt werden. Für universelle Wechsel der FOVs in Videos für die Projektion auf ebene Flächen sind in der Regel Kamerafahrten mit fester Geschwindigkeit entlang einer Geraden gut geeignet. Andere Varianten, z. B. eine steigende oder sinkende Geschwindigkeit oder eine unregelmäßige Kurvenbewegung, sind ebenfalls möglich.

Welches Video (also welcher dynamische FOV-Datensatz) bei der Ausspielung für einen konkreten Perspektivenwechsel benutzt werden muss, ergibt sich aus der Ausgangsblickrichtung der (virtuellen) Kameras und der Anzahl der vergangenen Intervalle tc.

Diese Schritte a) und b), in welchen alle Videos (FOV-Datensätze) wie angegeben vorberechnet werden, soll als Pre-Rendering-Prozess bezeichnet werden. Der Pre-Rendering-Prozess kann sowohl auf persistierte Inhalte (on-demand content) als auch mit einer geringen Verzögerung auf Live-Inhalte (live content) angewandt werden. Grundsätzlich kann das Pre-Rendering zu einem beliebigen Zeitpunkt durchgeführt werden. Es muss auch nur einmalig durchgeführt werden. Die nachfolgenden Schritte nutzen dann diese vorberechneten FOV-Datensätze.

Das berechnete Videomaterial aus dem Pre-Rendering-Prozess wird komplett (für on-demand content) oder progressiv (für live content) in einem CDN / Storage Server 5 bereitgestellt, der in Fig. 4 dargestellt ist.

Der CDN / Storage Server 5 weist dabei Datensätze für statische FOVs 6, 8 sowie einen dynamischen FOV 7 auf. In den Datensätzen 6, 7, 8 sind einzelne Teilabschnitte 9, 10 der Videos mit unterschiedlichen FOVs (in GOPs oder Segmente organisiert) angeordnet. Die statischen FOVs 6, 8 sind in Fig. 4 daran erkennbar, dass in den jeweiligen symbolisch dargestellten Datensätzen 6, 8 die Pfeilrichtung der Teilabschnitte 9 für die feste Blickrichtung 4 unverändert ist. In dem symbolisch dargestellten Datensatz für den dynamischen FOV 7 sind in dem Datensatz Teilabschnitte 10 mit unterschiedlichen Blickrichtungen enthalten.

Die Datensätze 6, 7, 8 auf dem CDN / Storage Server 5 stehen somit für einen beliebigen Abruf und für den nachfolgenden Schritt der Ausspielung (Schritte d), e)) in einem Gesamtvideo zur Verfügung.

### c) Auswahl Ausgangs- und Ziel-FOV

Auf der Grundlage der vorgespeicherten statischen und dynamischen FOV-Datensätze kann nun die eigentliche Wiedergabe in Gang gesetzt werden. Dazu wird ein statischer oder dynamischer Ausgangs-FOV und ein statischer oder dynamischer Ziel-FOV, insbesondere von einem Nutzer, gezielt angewählt.

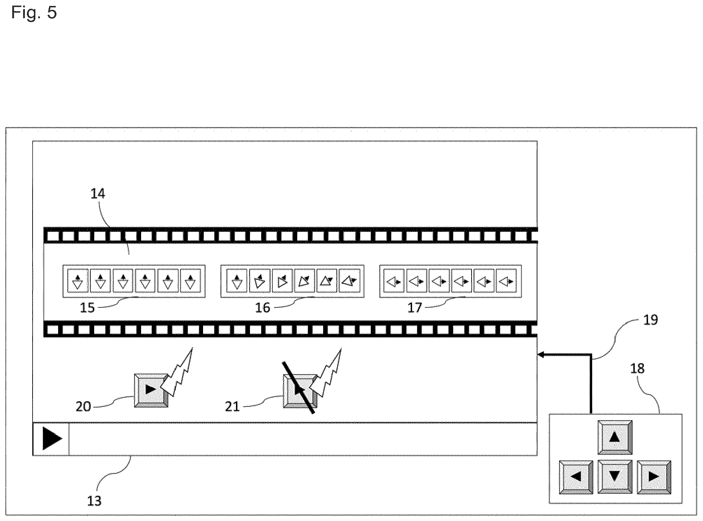

Dazu kann ein Client, der z.B. mit dem CDN / Storage Server 5 in Datenaustauschverbindung steht, an fest definierten Zeitpunkten (n * t_{G}) einen Wechsel der FOV vornehmen, indem ein vorberechnetes Video mit einem dynamischen FOV-Wechsel 16 (siehe Fig. 5) fortgesetzt wird.

Der Wechsel wird dabei durch eine Nutzerinteraktion ausgelöst, z.B. durch einen Tastendruck oder eine andere Eingabemethode.

Daraufhin werden die vorberechneten FOV-Datensätze (siehe Fig. 4) abgerufen, so dass keine rechenintensive Neuberechnung (re-encoding) erforderlich ist. Die vorberechneten Datensätze 6, 7, 8 werden so aneinandergesetzt, dass sie an entsprechenden Übergangspunkten ineinander übergehen (Schnitt mittels Dateikopieroperation).

Neben der Navigation mittels Fernbedienung, wie in Fig 5 illustriert, sind beliebige geeignete andere Navigationsformen, beispielsweise durch Bewegen (Verschieben, Schwenken am Ort...) eines mobilen Gerätes im Raum möglich. In diesen Fällen sind auch andere als ausschließlich horizontale und vertikale Wechsel des FOV möglich, wenn entsprechende Videodatensätze 6, 7, 8 vorgespeichert sind. Anderenfalls erfolgt eine Approximation des Wechsels des FOV durch die geeignete Kombination horizontaler und vertikaler Wechsel des FOV ("Sägezahn-Perspektivenwechsel").

### d) Streamen der Videodaten

Anschließend werden die den angewählten FOV-Datensätzen zeitlich entsprechenden Videodaten (FOV-Teil-Datensätze), einschließlich der dynamischen Übergangsdaten zwischen Ausgangs-FOV und Ziel-FOV, in der korrekten Reihenfolge zum Client gestreamt. Dabei wird auf die bereits vorberechneten und abgespeicherten FOV-Datensätze zurückgegriffen,

In Fig. 5 ist dargestellt, dass nach Anwahl eines Ausgangs-FOV-Datensatzes 15 und eines Ziel-FOV-Datensatzes 17 ein dynamischer FOV-Datensatz 16 eingefügt wird, in dessen Segmenten sich die Blickrichtung 4 sukzessive ändert. Das Streamen der Datensätze 15, 16, 17 an Videoclient 13 wird durch den Filmstreifen 14 symbolisiert.

Dabei werden die Videosequenzen (statische FOV-Datensätze und dynamische FOV-Datensätze) so miteinander synchronisiert, dass an fest definierten Punkten im zeitlichen Ablauf (Übergangspunkten) nahtlose Wechsel zwischen den Videosequenzen möglich sind. Dazu werden für alle Zeitpunkte n * t_{G} (36 in Fig. 3) die Positionen (z.B. durch Byte offsets oder Speicherung in separate Dateien) in den Videos erfasst.

Die relativ wenig rechenintensive Berechnung das resultierende Video (37 in Fig. 3) zu konkatenieren wird für jeden Videoclient 13 nach dem Abruf aus dem CDN / Storage Server 5 im Backend oder von jedem Videoclient 13 selbst durchgeführt.

### e) Anzeige des Videos

Der Videoclient 13 beginnt dann (zum Zeitpunkt T₀) eine Sitzung mit dem Abspielen eines beliebigen vorberechneten statischen FOV-Datensatzes 15.

An einem beliebigen Zeitpunkt (Ta + m * t_{G}) löst der Nutzer (z.B. durch Tastendruck 20) den Wechsel von einem statischen zu einem dynamischen FOV aus.

An einem beliebigen späteren Zeitpunkt (T₀ + n * t_{G}, m < n) kann der Videoclient 13 die Abspielung eines vorberechneten statischen FOV-Datensatzes 17 oder eines anderen dynamischen FOV-Datensatzes 16 fortsetzen. Der Wechsel kann z.B. durch ein Nutzerereignis (z.B. Loslassen einer Taste 21) ausgelöst werden. Der Vorgang wiederholt sich beginnend bis zum Ende des gestreamen Videos 14. Die Größe t_{G} ist eine feste Intervallgröße, die beim Pre-rendering von dem "Konfigurator" bzw. durch eine Kundenanforderung definiert wird, dabei wird die Größe durch die Entsprechung oder ein Vielfaches der Group-of-Pictures (GOP) Länge oder einer sonstigen technischen Segmentlänge bei der Erstellung der Videos bestimmt. Die beispielhaften Produkte m * t_{G} und n * t_{G} sind diskrete Zeitpunkte auf den Zeitskalen der vorberechneten Videos, an denen eine direkte Umschaltung möglich ist, ohne dass die Videodaten neu kodiert werden müssen. Fig. 3 veranschaulicht mögliche Umschaltmöglichkeiten 36 an den Zeitpunkten wo sich jeweils zwei vorberechnete Videos "schneiden", d.h. der Zeitpunkt und die Ausrichtung identisch sind, und einfach zusammenfügen lassen.

Damit kann eine unendliche Anzahl an Möglichkeiten in einem sphärischen Video auf ein sinnvolles Maß reduziert werden.

Die Fig. 2 veranschaulicht beispielhaft und auf zwei statische FOV-Datensätze und einen dynamischen FOV-Datensatz beschränkt den zeitlichen Ablauf des Verfahrens der Ausspielung.

Der Videoclient 13 beginnt die Wiedergabe mit einem statischen FOV P1 und setzt nach dem Zeitintervall 2 * t_{G} die Transition mit dem Wechsel zum dynamischen FOV T1 ein, die ein Zeitintervall andauert. Diese wird gefolgt von der Wiedergabe des zweiten statischen FOV-Datensatzes P2. Im Falle eines zylindrischen oder sphärischen Quellmaterials kann man für P1 und P2 jeweils eine unterschiedliche aber feste Kameraperspektive annehmen und für T1 aufeinanderfolgend alternierende Übergänge (Kameraschwenks) von der einen Perspektive zur anderen und wieder zurück. Analog dazu kann im Falle eines ebenflächigen breiten Quellmaterials P1 als linker Bildausschnitt und P2 als rechter Bildausschnitt angenommen werden und T1 bildet dazu alternierend die Übergänge von links nach rechts und rechts nach links ab. Auch kann für P1 eine Weitwinkelaufnahme und P2 eine Nahaufnahme derselben Szene angenommen werden mit jeweils den alternierenden Übergängen T1 (Hineinzoomen, Herauszoomen).

Ein typischer Wert für t_{G} mit guter Nutzbarkeit beim Perspektivenwechsel ist 333 ms (entspricht einer GOP-Länge von 10 bei 30 Bildern pro Sekunde). Bei diesem Wert ist der Nutzer in der Lage, den Wechsel des FOVs (Perspektivenwechsel) 3-mal pro Sekunde neu bestimmen zu können. Das Zeitintervall t_{G} kann aber auch andere Werte annehmen, wichtig ist allerdings, dass dieses Intervall dann in allen vorberechneten Videos als Basiswert für die GOPs bzw. Segmente genutzt wird. t_{G} bestimmt demnach die Abspielzeit einer GOP bzw. eines Segments.

Die Wirkung des beschriebenen Verfahrens besteht darin, dem Zuschauer nahtlose Übergänge zwischen Perspektiven, d. h. FOVs, in Videos zu ermöglichen. Der Vorteil besteht darin, dass das Verfahren durch die Vorverarbeitung (obige Schritte a), b)) effizient skaliert und die Endgeräteanforderungen bei der Ausspielung für eine qualitativ hochwertige Wiedergabe niedrig bleiben.

Beispiele für den Einsatz des Verarbeitungsfahrens für Videodaten sind:
- Effizientes und skalierbares (Live-)Streaming von 360°- oder Panorama-Videos für Unterhaltung (Film, Dokumentation, Events), Sicherheitstechnik
- Interaktives Video, Panning / Verschieben / Schwenken in einem sehr hoch aufgelösten Quellvideo

### Beispiel: 16K-360°-Video-Streaming

Im Folgenden wird eine Anwendung einer der Ausführungsformen dargestellt, nämlich "Streaming und Playback von 16K-360°-Videos".

Die herkömmlichen Ansätze, die das komplette 16K-360°-Quellvideo zum Videoclient 13 streamen, brauchen eine Bandbreite von ungefähr 320 Mbit/s. Der Videoclient 13 muss in diesem Fall auch die Berechnung der FOV-Frames aus den Frames des Quellvideos lokal ausführen. Diese Berechnung braucht sogar auf PCs mit aktueller Hardware mehrere Sekunden im Falle von 16K-Quellvideos, d. h. das Abspielen in Echtzeit ist nicht möglich. Es wird bei einem Video mit einer Framerate von 30 Frames pro Sekunde erwartet, dass die geometrische Transformation mindestens so schnell wie die ursprüngliche Framerate vom Quellvideo sein muss, um ein reibungsloses Abspielen zu ermöglichen. Tests zeigen, dass die Berechnung eines Frames ca. 8 Sekunden dauert. Für die Berechnung von 30 Frames, sprich einer Sekunde Video, dauert der Vorgang daher ca. 240 Sekunden.

Mit einer Ausführungsform des oben beschriebenen Verfahrens werden die FOV-Datensätze in 4K-Qualität aus dem 16K-Quellvideo vorberechnet und auf einem Storage Server gespeichert. Für das Streaming fragt der Videoclient 13 die entsprechenden Segmente (d. h. Datensätze 6, 7, 8) aus den vorberechneten FOV-Videos an. Der Server 5 liefert nur den jeweils sichtbaren 4K-FOV-(Teil-)Datensatz zum Client 13. Die benötigte Bandbreite ist ungefähr 20 Mbits/s. Im Gegensatz zu herkömmlichen Ansätzen braucht der Videoclient bei der hier vorgestellten Lösung keine geometrische Transformation auszuführen und so ist ein weiches und reibungsfreies Abspielen gewährleistet. Durch das Verarbeitungsfahren für Videodaten wird das Nutzungserlebnis somit optimal und effizient unterstützt.

## Patentansprüche

1. Verarbeitungsverfahren für Videodaten, die auf mindestens einer Displayvorrichtung anzeigbar sind, wobei
a) aus den Videodaten eine vorbestimmte Menge statischer Sichtfeld FOV-Datensätze (6, 8) vorberechnet und gespeichert wird,
b) ferner Videodaten für zeitliche Übergänge zwischen den gespeicherten statischen FOV-Datensätzen (6, 8) als dynamische FOV-Datensätze (7) berechnet und gespeichert werden, wobei sofort oder zu einem späteren Zeitpunkt
c) ein statischer oder dynamischer Ausgangs-FOV und ein statischer oder dynamischer Ziel-FOV, insbesondere von einem Nutzer, gezielt angewählt wird und
d) die den angewählten FOV-Datensätzen zeitlich entsprechenden Videodaten, einschließlich der dynamischen FOV-Datensätze (7) zwischen Ausgangs-FOV und Ziel-FOV, streambar sind oder gestreamt werden.

2. Verarbeitungsverfahren nach Anspruch 1, wobei die Videodaten einschließlich der dynamischen FOV-Datensätze (7) auf der Displayvorrichtung, insbesondere einem Client (13) anzeigbar sind oder angezeigt werden.

3. Verarbeitungsverfahren für Videodaten nach Anspruch 1 oder 2, wobei ausschließlich die zeitlich entsprechenden Videodaten des Ausgangs-FOV-Datensatzes, des Ziel-FOV-Datensatzes und die dynamischen FOV-Datensätze (7) streambar sind oder gestreamt werden.

4. Verarbeitungsverfahren für Videodaten nach mindestens einem der vorhergehenden Ansprüche, wobei die vorberechneten statischen FOV-Datensätze (6, 8) und die vorberechneten dynamischen FOV-Datensätze (7) auf einem Serversystem (5), insbesondere einem verteilten Serversystem gespeichert sind.

5. Verarbeitungsverfahren für Videodaten nach Anspruch 4, wobei das Serversystem (5) geografisch verteilt aufgebaut ist und die Datensätze mindestens teilweise redundant darauf gespeichert sind.

6. Verarbeitungsverfahren für Videodaten nach mindestens einem der vorhergehenden Ansprüche, wobei die dynamischen FOV-Datensätze (7) aus einem Datensatz auswählbar sind, der einen vorbestimmten Bereich, insbesondere Winkelbereich oder Raumwinkelbereich, abdeckt.

7. Verarbeitungsverfahren für Videodaten nach mindestens einem der vorhergehenden Ansprüche, wobei die Position, insbesondere der Standpunkt und/oder die Blickrichtung, eines virtuellen Betrachters beim Ausgangs-FOV und dem Ziel-FOV unterschiedlich ist.

8. Verarbeitungsverfahren für Videodaten nach mindestens einem der vorhergehenden Ansprüche, wobei die Displayvorrichtung mindestens einen Flatscreen, mindestens einen gekrümmten Panoramabildschirm, eine Halbkugelprojektionsfläche, ein Head-Mounted-Display und / oder eine Fulldomeprojektionsfläche aufweist.

9. Verarbeitungssystem für Videodaten, die auf mindestens einer Displayvorrichtung anzeigbar sind, aufweisend
ein Mittel zur Vorberechnung und Speicherung einer vorbestimmten Menge statischer FOV-Datensätze (6, 8) aus den Videodaten,
ein Mittel zur Berechnung und Speicherung dynamischer FOV-Datensätze (7) als Übergangsdaten für die zeitlichen Übergänge der gespeicherten statischen FOVs, (6, 8)
ein Mittel zur gezielten Anwahl eines statischen oder dynamischen Ausgangs-FOV und eines statischen oder dynamischen Ziel-FOV, insbesondere von einem Nutzer drückbare Tasten, und
ein Mittel zum Streamen der den angewählten FOV-Datensätzen zeitlich entsprechenden Videodaten, einschließlich der dynamischen FOV-Datensätze (7) zwischen Ausgangs-FOV und Ziel-FOV.

10. Verarbeitungssystem nach Anspruch 9, aufweisend eine Displayvorrichtung, insbesondere in einem Client (13).

11. Verarbeitungssystem nach Anspruch 9 oder 10, wobei
das Mittel zur Vorberechnung und Speicherung einer vorbestimmten Menge statischer FOV-Datensätze (6, 8) aus den Videodaten, und / oder
das Mittel zur Berechnung und Speicherung dynamischer FOV-Datensätze (7) als Übergangsdaten für die zeitlichen Übergänge der gespeicherten statischen FOVs, (6, 8) und / oder
das Mittel zur gezielten Anwahl eines statischen oder dynamischen Ausgangs-FOV und eines statischen oder dynamischem Ziel-FOV, insbesondere von einem Nutzer drückbare Tasten, und / oder
das Mittel zum Streamen der den angewählten FOV-Datensätzen entsprechenden Videodaten, einschließlich der dynamischen FOV-Datensätze (7) zwischen Ausgangs-FOV und Ziel-FOV,
verteilt auf unterschiedlichen Rechnern angeordnet sind.

## Claims

1. Processing method for video data that are displayable on at least one display device, wherein
a) from the video data a predetermined quantity of static field of view FOV datasets (6, 8) are precalculated and stored,
b) further, video data for temporal transitions between the stored static FOV datasets (6, 8) are calculated and stored as dynamic FOV datasets (7), wherein, immediately or at a later point in time,
c) a static or dynamic initial FOV and a static or dynamic target FOV are specifically selected for this purpose, in particular by a user, and
d) the video data corresponding in time to the selected FOV datasets, including the dynamic FOV datasets (7) between the initial FOV and the target FOV, are streamable or streamed.

2. Processing method according to Claim 1, wherein the video data, including the dynamic FOV datasets (7), are displayable or displayed on the display device, in particular a client (13).

3. Processing method for video data according to Claim 1 or 2, wherein only the video data corresponding in time of the initial FOV dataset, the target FOV dataset and the dynamic FOV datasets (7) are streamable or are streamed.

4. Processing method for video data according to at least one of the preceding claims, wherein the precalculated static FOV datasets (6, 8) and the precalculated dynamic FOV datasets (7) are stored on a server system (5), in particular a distributed server system.

5. Processing method for video data according to Claim 4, wherein the server system (5) is constructed in a geographically distributed form, and the datasets are at least partially redundantly stored thereon.

6. Processing method for video data according to at least one of the preceding claims, wherein the dynamic FOV datasets (7) are selectable from a dataset that covers a predetermined region, in particular an angular region or solid angular region.

7. Processing method for video data according to at least one of the preceding claims, wherein the position, in particular the standpoint and/or the direction of view, of a virtual observer is different in the initial FOV and the target FOV.

8. Processing method for video data according to at least one of the preceding claims, wherein the display device comprises at least a flat screen, at least a curved panoramic screen, a hemispherical projection surface, a head-mounted display and/or a fulldome projection surface.

9. Processing system for video data that are displayable on at least one display device, comprising
a means for precalculating and storing a predetermined quantity of static FOV datasets (6, 8) from the video data,
a means for calculating and storing dynamic FOV datasets (7) as transition data for the temporal transitions of the stored static FOVs (6, 8),
a means for the targeted selection of a static or dynamic initial FOV and a static or dynamic target FOV, in particular buttons that can be pressed by a user, and
a means for streaming the video data corresponding in time to the selected FOV datasets, including the dynamic FOV datasets (7) between the initial FOV and the target FOV.

10. Processing system according to Claim 9, comprising a display device, in particular in a client (13).

11. Processing system according to Claim 9 or 10, wherein
the means for precalculating and storing a predetermined quantity of static FOV datasets (6, 8) from the video data, and/or
the means for calculating and storing dynamic FOV datasets (7) as transition data for the temporal transitions of the stored static FOVs (6, 8), and/or the means for the targeted selection of a static or dynamic initial FOV and a static or dynamic target FOV, in particular buttons that can be pressed by a user, and/or
the means for streaming the video data corresponding to the selected FOV datasets, including the dynamic FOV datasets (7) between the initial FOV and the target FOV are disposed in a manner distributed over different computers.

## Revendications

1. Procédé de traitement de données vidéo, qui peuvent être affichées sur au moins un dispositif d'affichage, dans lequel
a) à partir des données vidéo, une quantité prédéterminée de jeux de données de champ de vision FOV (6, 8) statiques est précalculée et mémorisée,
b) en outre, des données vidéo pour des transitions temporelles entre les jeux de données FOV (6, 8) statiques mémorisés sont calculées et mémorisées en tant que jeux de données FOV (7) dynamiques, dans lequel, immédiatement ou à un instant ultérieur
c) un FOV de départ statique ou dynamique et un FOV cible statique ou dynamique sont sélectionnés de manière ciblée, en particulier par un utilisateur, et
d) les données vidéo correspondant dans le temps aux jeux de données FOV sélectionnés, y compris les jeux de données FOV (7) dynamiques entre le FOV de départ et le FOV cible, peuvent être diffusées ou sont diffusées en continu.

2. Procédé de traitement selon la revendication 1, dans lequel les données vidéo, y compris les jeux de données FOV (7) dynamiques, peuvent être affichées ou sont affichées sur le dispositif d'affichage, en particulier sur un client (13).

3. Procédé de traitement de données vidéo selon la revendication 1 ou 2, dans lequel seules les données vidéo, qui se correspondent dans le temps, du jeu de données FOV de départ, du jeu de données FOV cible et les jeux de données FOV (7) dynamiques peuvent être diffusées ou sont diffusées en continu.

4. Procédé de traitement de données vidéo selon au moins l'une des revendications précédentes, dans lequel les jeux de données FOV (6, 8) statiques précalculés et les jeux de données FOV (7) dynamiques précalculés sont mémorisés sur un système serveur (5), en particulier un système serveur réparti.

5. Procédé de traitement de données vidéo selon la revendication 4, dans lequel le système serveur (5) est construit de manière répartie géographiquement et les jeux de données y sont mémorisés au moins en partie de manière redondante.

6. Procédé de traitement de données vidéo selon au moins l'une des revendications précédentes, dans lequel les jeux de données FOV (7) dynamiques peuvent être sélectionnés à partir d'un jeu de données qui couvre une zone prédéterminée, en particulier une zone angulaire ou une zone angulaire spatiale.

7. Procédé de traitement de données vidéo selon au moins l'une des revendications précédentes, dans lequel la position, en particulier le point de vue et/ou la direction du regard, d'un observateur virtuel est différente pour le FOV de départ et le FOV cible.

8. Procédé de traitement de données vidéo selon au moins l'une des revendications précédentes, dans lequel le dispositif d'affichage comporte au moins un écran plat, au moins un écran panoramique incurvé, un écran de projection hémisphérique, un affichage tête haute et/ou un écran de projection à dôme intégral.

9. Système de traitement de données vidéo pouvant être affichées sur au moins un dispositif d'affichage, comportant
un moyen de précalcul et de mémorisation d'une quantité prédéterminée de jeux de données FOV (6, 8) statiques à partir des données vidéo,
un moyen de calcul et de mémorisation de jeux de données FOV (7) dynamiques en tant que données de transition pour les transitions temporelles des FOV (6, 8) statiques mémorisés,
un moyen de sélection ciblée d'un FOV de départ statique ou dynamique et d'un FOV cible statique ou dynamique, en particulier des touches imprimables par un utilisateur, et
un moyen de diffusion en continu des données vidéo correspondant dans le temps aux jeux de données FOV sélectionnés, y compris les jeux de données FOV (7) dynamiques entre le FOV de départ et le FOV cible.

10. Système de traitement selon la revendication 9, comportant un dispositif d'affichage, en particulier sur un client (13).

11. Système de traitement selon la revendication 9 ou 10, dans lequel
le moyen de précalcul et de mémorisation d'une quantité prédéterminée de jeux de données FOV (6, 8) statiques à partir des données vidéo, et/ou
le moyen de calcul et de mémorisation de jeux de données FOV (7) dynamiques en tant que données de transition pour les transitions temporelles des FOV (6, 8) statiques mémorisés et/ou
le moyen de sélection ciblée d'un FOV de départ statique ou dynamique et d'un FOV cible statique ou dynamique, en particulier de touches imprimables par un utilisateur, et/ou
le moyen de diffusion en continu des données vidéo correspondant aux jeux de données FOV sélectionnés, y compris les jeux de données FOV (7) dynamiques entre le FOV de départ et le FOV cible,
sont disposés de manière répartie sur différents ordinateurs.
